(19) Europäisches Patentamt
European Patent Office
Office européen des brevets

(11) EP 1 913 427 B1

(12) **EUROPEAN PATENT SPECIFICATION**

(45) Date of publication and mention of the grant of the patent:
**06.04.2011 Bulletin 2011/14**

(21) Application number: **06776745.9**

(22) Date of filing: **10.08.2006**

(51) Int Cl.:
***G02B 1/04*** *(2006.01)*

(86) International application number:
**PCT/EP2006/007924**

(87) International publication number:
**WO 2007/020010 (22.02.2007 Gazette 2007/08)**

# (54) METHOD FOR MAKING CONTACT LENSES

VERFAHREN ZUR HERSTELLUNG VON KONTAKTLINSEN

PROCEDE DE FABRICATION DE VERRES DE CONTACT

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.08.2005 US 707627 P**

(43) Date of publication of application:
**23.04.2008 Bulletin 2008/17**

(73) Proprietor: **Novartis AG**
**4056 Basel (CH)**

(72) Inventors:
- **WANG, Guigui**
  **Cumming, GA 30040 (US)**
- **SMITH, Dawn**
  **Duluth, GA 30097 (US)**
- **VOGT, Jürgen**
  **Duluth, GA 30097 (US)**
- **LALLY, John, Martin**
  **Laguna Niguel**
  **California 92677 (US)**
- **DEVLIN, Brian, Gerrard**
  **Suwanne, GA 30024 (US)**

(74) Representative: **Bohest AG**
**Postfach 160**
**4003 Basel (CH)**

(56) References cited:
**EP-A- 0 329 386**
**EP-A- 0 329 388**
**EP-A- 0 420 403**
**WO-A-97/05190**
**WO-A-02/071106**
**US-A- 4 534 916**
**US-A- 5 374 668**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 913 427 B1

## Description

The present invention is related to a method for making a contact lens with an enhanced product quality and yield. In particular, the present invention is related to a method for facilitating mold separation and lens removal from a mold in a cast-molding process of contact lenses, thereby enhancing the quality and yield of produced contact lenses.

## BACKGROUND

Contact lenses can be manufactured economically in a mass production manner by a conventional cast-molding process involving disposable molds (e.g., PCT published patent application No. WO/87/04390, EP-A 0 367 513, U.S. Patent No. 5,894,002, or by an improved cast-molding process involving reusable molds and curing under a spatial limitation of actinic radiation (U.S. Patent Nos. 5,508,317, 5,583,163, 5,789,464 and 5,849,810). A critical step in the production of lenses using molds is mold opening and lens releasing from the mold without damaging the lens. Subsequent to the completion of the contact lens molding process, the polymerized lens tends to strongly adhere to the mold. During mold opening and removing the contact lenses from the mold, cracks, flaws and/or tears may occur in the lenses or in the worst case the contact lenses even break totally. Contact lenses having such defects have to be discarded and lower the overall production yield.

Several methods have been developed or proposed. One method for releasing lenses is to hydrate the lens, namely, a lens-in-mold assembly after mold separation is placed in a hydration tank filled with water. Often hydration alone does not release the lenses from the molds. The lenses must then be gently removed from molds by hand. Such hand-assisted lens removal increases the likelihood of lens damage. US 5,264,161 discloses an improved method for releasing a lens from a mold, in which surfactants are added to the hydration bath to facilitate the release of lenses from molds. However, the utilization of surfactants in a hydration bath does not provide a more effortless mold separation. Lens damage incurred during mold separation may not be minimized by hydrating lenses.

Another method of lens release is to incorporate surfactants as internal mold releasing agents into molds as illustrated by U.S. Pat. No. 4,159,292. Incorporation of internal mold releasing agents in molds can decrease adhesion between lenses and molds. However, when a mold is used repeatedly, surfactants as internal mold releasing agent can be exhausted by exudation.

A further method of lens release is to apply external mold releasing agents (e.g., surfactants) in the form of a film or coating onto to the molding surfaces of a mold (e.g., those disclosed in U.S. Pat. Nos. 4,929,707 and 5,542,978). When external mold releasing agents are used, a portion of the agents used for treating the molding surfaces of the mold can migrate to the surface and interior of the polymerized lens, which results in problems such as nonuniformity of the surface of the lens and turbidity. When a mold is used repeatedly, mold releasing treatment is required in each molding cycle. Such treatment can lower productivity in producing the lens.

A still further method of lens release is to incorporate internal mold releasing agents into a lens-forming composition for making contact lenses. The internal mold releasing agent can be a surfactant (U.S. Pat. Nos. 4,534,916, 4,929,707, 4,946,923, 5,013,496, 5,021,503, 5,126,388, 5,594,088, 5,753,730) or a non-polymerizable polymer (U.S. Pat. No. 6,849,210). By incorporation of an internal mold releasing agent in a lens-forming composition (or lens formulation), the adhesion between molds and lenses may be reduced, a relatively smaller force may be required to separate mold, and lenses may be removed from molds with less effort. However, for a specific lens material and/or a mold material, not all surfactants or polymers can be effective mold releasing agents for facilitating mold separation and lens removal from a mold, in particular, under conditions of high speed automated operations (i.e., the time interval between dosing a lens-forming material in a mold and curing the lens-forming material in the mold is relatively short, e.g., less than about 20 seconds). Although some mold releasing agents may be able to lower an averaged mold separation force for a given lens-forming material, individual mold separation forces may vary widely and become an uncontrollable factor that affects the product quality and yield. In addition, a non-crosslinkable polymer may be effective in reducing mold separation force but may have adverse effects on the properties of resultant lenses. For example, it may cause resultant lenses to be hazy and affect the refractive index of the resultant lenses. Furthermore, there are few known methods for selecting a non-polymerizable polymer as an effective mold releasing agent for a given lens-forming material.

Therefore, there still a need for a method for selecting an effective mold releasing agent for a given lens-forming material. There is also a need for a process for cast-molding contact lenses with an enhanced quality and enhanced yield achieved by reducing mold separation force and lens-mold adhesion.

## SUMMARY OF THE INVENTION

The invention provides a method according to claim 1 for producing a contact lens with relatively high quality and with relatively high yield. The method comprises the steps of: (1) introducing a fluid composition into a mold for making a contact lens, wherein the fluid composition comprises a lens-forming material and a non-crosslinkable hydrophilic polymer, wherein the lens-forming material is crosslinkable and/or polymerizable by actinic radiation, wherein the non-crosslinkable hydrophilic polymer has a limited miscibility with the lens-forming material low enough to form an interfacial film at interface between the mold and the fluid composition therein within a desired time period and with a thickness sufficient to reduce an averaged mold separation force; (2) crosslinking/polymerizing the lens-forming material in the mold to form a lens having a polymer matrix, wherein the non-crosslinkable hydrophilic polymer has a structure that minimizes entanglement of the non-crosslinkable hydrophilic polymer in the film with the polymer matrix of the formed lens; and (3) separating the mold, wherein the non-crosslinkable hydrophilic polymer is present in an amount sufficient to reduce an averaged mold separation force by at least about 40% in comparison with that without the non-crosslinkable hydrophilic polymer and to provide a disparity of about 10 N or less in mold separation force, thereby leading to an increased production yield and an improved lens quality.

BRIEF DESCRIPTION OF THE DRAWINGS

FIG. 1 illustrates effectiveness of various mold releasing agents in reducing mold separation force.

FIG. 2 illustrates effectiveness of PVP K-15 as internal mold releasing agent at concentration of 0, 1.0%, 1.5%, and 2% by weight respectively.

FIG. 3 shows determination of the cloud points of three formulations in the presence of PVP.

FIG. 4 shows comparison of mold separation force between two different waiting times.

FIG. 5 illustrates effectiveness of raw, purified, three fractions (Fractions I, II, and III) PVP-K-15 in reducing mold separation force.

FIG. 6 shows reduced mold separation forces at different concentrations of PVP.

FIG. 7 shows cloud measurements of three formulation containing PEG.

FIG. 8 shows mold separation forces for three formulation containing PEG.

DETAILED DESCRIPTION OF THE PREFERRED EMBODIMENTS

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art. As employed throughout the disclosure, the following terms, unless otherwise indicated, shall be understood to have the following meanings.

The term "contact lens" employed herein in a broad sense and is intended to encompass any hard or soft lens used on the eye or ocular vicinity for vision correction, diagnosis, sample collection, drug delivery, wound healing, cosmetic appearance (e.g., eye color modification), or other ophthalmic applications.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to, poly(vinyl alcohol) (PVA), modified polyvinylalcohol (e.g., as nelfilcon A), poly (hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethanes, polyureas, and the like. A hydrogel can be prepared according to any methods known to a person skilled in the art.

A "silicone hydrogel" refers to a hydrogel obtained by copolymerization of a polymerizable composition comprising at least one silicone-containing monomer or at least one silicone-containing macromer.

The term "fluid" as used herein indicates that a material is capable of flowing like a liquid.

A "lens-forming material" refers to a material which can be polymerized and/or crosslinked by actinic radiation to form a contact lens.

Actinic radiation refers to radiation of a suitable form of energy. Examples of actinic radiation includes without limitation light radiation (e.g., UV radiation), gamma radiation, electron radiation, X-ray irradiation, microwave irradiation, thermal radiation and the like.

As used herein, a "monomer" or a "vinylic monomer" interchangeably means a low molecular weight compound that can be polymerized actinically or thermally. Typically, a monomer comprises an ethylenically unsaturated group. Low molecular weight typically means average molecular weights less than 700 Daltons.

The term "ethylenically unsaturated group" or "olefinically unsaturated group" is employed herein in a broad sense and is intended to encompass any groups containing at least one >C=C< group. Exemplary ethylenically unsaturated groups include without limitation acryloyl, methacryloyl, allyl, vinyl, styrenyl, or other C=C containing groups.

A "hydrophilic monomer" refers to a monomer which can be polymerized to form a homopolymer which can absorb at least 10 percent by weight of water when fully hydrated.

As used herein, a "macromer" means a medium and high molecular weight compound or polymer that contain ethylenically unsaturated group(s) capable of being polymerized actinically or thermally. Medium and high molecular weight typically means average molecular weights greater than 700 Daltons.

"Molecular weight" of a polymeric material (including monomeric or macromeric materials), as used herein, refers to the number-average molecular weight unless otherwise specifically noted or unless testing conditions indicate otherwise.

A "polymer" means a material formed by polymerizing one or more monomers.

A "prepolymer" refers to a starting polymer which can be polymerized and/or crosslinked upon actinic radiation to obtain a crosslinked polymer having a molecular weight much higher than the starting polymer.

A "photoinitiator" refers to a substance that can initiate free radical polymerization and/or crosslinking by the use of light. Suitable photoinitiators are benzoin methyl ether, diethoxyacetophenone, a benzoylphosphine oxide, 1-hydroxycyclohexyl phenyl ketone and Darocure and Irgacur types, preferably Darocure 1173® and Irgacure 2959®. Examples of benzoylphosphine initiators include 2,4,6-trimethylbenzoyldiphenylo-phosphine oxide; bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 632 329. The polymerization can then be triggered off by actinic radiation, for example light, in particular UV light of a suitable wavelength. The spectral requirements can be controlled accordingly, if appropriate, by addition of suitable photosensitizers.

A "visibility tinting agent" refers to a substance that dyes (or colors) a contact lens to enable a user to easily locate a contact lens in a clear solution within a lens storage, disinfecting or cleaning container. It is well known in the art that a dye and/or a pigment can be used as a visibility tinting agent.

A "dye" means a substance that is soluble in a solvent and that is used to impart color. Dyes are typically translucent and absorb but do not scatter light. Any suitable biocompatible dye can be used in the present invention.

A "Pigment" means a powdered substance that is suspended in a liquid in which it is insoluble. A pigment can be a fluorescent pigment, phosphorescent pigment, pearlescent pigment, or conventional pigment. While any suitable pigment may be employed, it is presently preferred that the pigment be heat resistant, non-toxic and insoluble in aqueous solutions. Examples of preferred pigments include (C.I. is the color index no.), without limitation, for a blue color, phthalocyanine blue (pigment blue 15:3, C.I. 74160), cobalt blue (pigment blue 36, C.I. 77343), Toner cyan BG (Clariant), Permajet blue B2G (Clariant); for a green color, phthalocyanine green (Pigment green 7, C.I. 74260) and chromium sesquioxide; for yellow, red, brown and black colors, various iron oxides; PR122, PY154, for violet, carbazole violet; for black, Monolith black C-K (CIBA Specialty Chemicals).

A "spatial limitation of actinic radiation" refers to an act or process in which energy radiation in the form of rays is directed by means of, for example, a mask or screen or combinations thereof, to impinge, in a spatially restricted manner, onto an area having a well defined peripheral boundary. For example, a spatial limitation of UV radiation can be achieved by using a mask or screen which has a transparent or open region (unmasked region) surrounded by a UV impermeable region (masked region), as schematically illustrated in Figs 1-9 of U.S. Patent No. 6,627,124. The unmasked region has a well defined peripheral boundary with the unmasked region.

The term "mold separation force" as used herein refers to a force required for separating a mold after casting molding a contact lens in the mold. Mold separation force is proportional to adhesion between a mold and a lens cast-molded therein.

An "averaged mold separation force" refers to a value obtained by averaging at least 10 independent measurements of mold separation force (i.e., 10 testing samples).

In general, the invention is directed to a method for reducing adhesion between a mold (or mold half) and a contact lens cast-molded in the mold. The method of the invention relies on a non-crosslinkable hydrophilic polymer as an internal mold releasing agent in a lens-forming formulation (composition). A non-crosslinkable hydrophilic polymer of the invention is selected to reduce an averaged mold separation force by at least about 40% in comparison with that without the non-crosslinkable hydrophilic polymer and to provide a disparity of about 10 N or less in measured mold separation forces.

The invention is partly based on the discovery that, when a non-crosslinkable hydrophilic polymer, i.e. polyvinylpyrrolidone (PVP), is used as a mold releasing agent in a lens-forming composition including a water-soluble crosslinkable prepolymer as a lens-forming material, its efficiency in reducing averaged mold separation force and disparity (or difference or variation) among individual measured mold separation force depends on the molecular weight and/or structure of the non-crosslinkable hydrophilic polymer. It is found that the averaged mold separation force decreases, reaches a minimum value, and then increases, as the molecular weight of an used non-crosslinkable hydrophilic polymer (mold releasing agent) increases. A similar correlation exist between the disparity in individual mold separation force

and the molecular weight of an used non-crosslinkable hydrophilic polymer (mold releasing agent).

Although the inventors do not wish to be bound by any particular theory, it is believed that reduction of mold separation force by the presence of a mold releasing agent is due to an interfacial film formed from a mold releasing agent at the interface between a mold and a lens-forming composition therein. Intactness of this interfacial film may affect the quality of lenses to be produced, since localized lens-to-mold adhesion in defected areas (e.g., holes or broken areas) of the interfacial film can be high enough to cause lens defects such as cracks, flaws and/or tears during mold separation process. Speed of the formation of this interfacial film can also be important considering the dynamic nature of lens production. If the formation of an interfacial film is too slow, there may not be enough time to form an intact interfacial film or an intact interfacial film with sufficient thickness. PVP with lower molecular weight may have a better miscibility (or compatibility) with a lens-forming material

(e.g., a crosslinkable poly(oxyalkylene)-containing polyurea prepolymer) in a formulation and as such it can not form an intact interfacial film with sufficient thickness to reduce averaged mold separation force and disparity in mold separation force (measured). With increase in molecular weight, PVP become more and more immiscible with the lens-forming material in the formulation. High miscibility may reduce migration tendency and/or speed of the non-crosslinkable hydrophilic polymer to the interface between the mold and the lens-forming composition and hence PVP with lower molecular weight may not be able to form a relatively intact interfacial film with sufficient thickness at the interface between the mold and the lens-forming composition within a desired time period. PVP with higher molecular weight may have greater tendency and speed to form on time an intact interfacial film at the interface between the mold and the lens-forming composition. It is also believed that molecules of a mold releasing agent in the interfacial film should not have any significant portion(s) (e.g., relatively long tails or dangling polymer chain segments) of its structure which can penetrate into a formed lens and become entangled with the polymer matrix of the formed lens. Such penetration and entanglement of a mold releasing agent in the interfacial film may increase mold separation force. As the molecular weight of PVP becomes higher, their molecules in the interfacial film may have such entanglement with a formed lens and the mold separation force increases. Higher the molecular weight is, higher the entanglement extent is. To be an efficient mold releasing agent, a non-crosslinkable hydrophilic polymer should have a limited miscibility with a lens-forming material in a formulation low enough to timely and successfully form an intact interfacial film with a sufficient thickness formed within a desired time period at the interface between the mold and the lens-forming composition and it also should have a structure that can minimize entanglement of the non-crosslinkable hydrophilic polymer in the interfacial film with the polymer matrix of the lens formed by polymerization of the formulation in the mold. By adding such a non-crosslinkable hydrophilic polymer to a lens-forming composition for making contact lenses, one can at least minimize the effects of the adhesion between the mold and a formed lens therein upon the product quality and yield and therefore make the lens production much more robust.

The invention provides a method for producing a contact lens with relatively high quality and with relatively high yield. The method comprises the steps of:

(1) introducing a fluid composition into a mold for making a contact lens,
wherein the fluid composition comprises a lens-formina material and a non-crosslinkable hydrophilic polymer,
wherein the lens-forming material is crosslinkable and/or polymerizable by actinic radiation or by heating,
wherein the non-crosslinkable hydrophilic polymer has a limited miscibility with the lens-formina material low enough to form an intact interfacial film at interface between the mold and the fluid composition therein within a desired time period and with a thickness sufficient to reduce an averaged mold separation force:
(2) crosslinking/polymerizing the lens-forming material in the mold to form a lens having a polymer matrix, wherein the non-crosslinkable hydrophilic polymer has a structure that minimizes entanglement of the non-crosslinkable hydrophilic polymer in the interfacial film with the polymer matrix of the formed lens; and
(3) separating the mold, wherein the non-crosslinkable hydrophilic polymer is present in an amount sufficient to reduce an averaged mold separation force by at least about 40% in comparison with that without the non-crosslinkable hydrophilic Polymer and to provide a disparity of about 10 N or less in mold separation force, thereby leading to an increased production yield and an improved lens quality,

characterized in that
the non-crosslinkable hydrophilic polymer is a poly-N-vinyl pyrrolidone (PVP), polyethyleneglycol (PEG), or poloxamer which have a number average molecular weight of from about 4000 to about 12000, and
the lens-forming material comprises at least one prepolymer, wherein the prepolymer is a water-soluble crosslinkable polyurea prepolymer having a formula (1)

$$CP\text{-}(Q)_q \qquad (1)$$

wherein q is an integer of ≥3, Q is an organic radical that comprises at least one crosslinkable group, CP is a multivalent

branched copolymer fragment comprising segments A and U and optionally segments B and T,
wherein: A is a bivalent radical of formula

$-NR_A- A_1-NR_A'-$ (2),

wherein $A_1$ is the bivalent radical of $-(R_{11}-O)_n (R_{12} O)_m (R_{13}-Q)_p-$, a linear or branched $C_2$-$C_{24}$ aliphatic bivalent radical, a $C_5$-$C_{24}$ cycloaliphatic or aliphatic-cycloaliphatic bivalent radical, or a $C_6$-$C_{24}$ aromatic or araliphatic bivalent radical, $R_{11}$, $R_{12}$, $R_{13}$, independently of one other, are each linear or branched $C_2$-$C_4$-alkylene or hydroxy-substituted $C_2$-$C_8$ alkylene radical, n, m and p, independently of one another, are each a number from 0 to 100, provided that the sum of (n+m+p) is 5 to 1000, and $R_A$ and $R_A'$ independently of each other is hydrogen, an unsubstituted $C_1$-$C_6$alkyl, a substituted $C_1$-$C_6$alkyl, or a direct, ring-forming bond:
T is a bivalent radical of formula

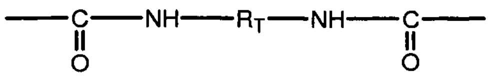

(3).

wherein $R_T$ is a bivalent aliphatic, cycloaliphatic, aliphatic-cycloaliphatic, aromatic, araliphatic or aliphatic-heterocyclic radical:
U is a trivalent radical of formula

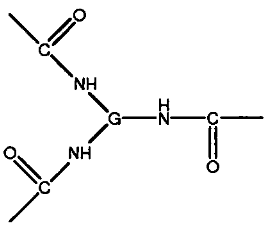

(4).

wherein G is a linear or branched $C_3$-$C_{24}$ aliphatic trivalent radical, a $C_5$-$C_{45}$ cycloaliphatic or aliphatic-cycloaliphatic trivalent radical, or a $C_3$-$C_{24}$ aromatic or araliphatic trivalent radical;
B is a radical of formula

$-NR_B-B_1-NR_B'-$ (5),

wherein $R_B$ and $R_B'$ independently of each other is hydrogen, an unsubstituted $C_1$-$C_6$alkyl, a substituted $C_1$-$C_6$alkyl, or a direct, ring-forming bond, $B_1$ is a bivalent aliphatic, cycloaliphatic, aliphatic-cycloaliphatic, aromatic or araliphatic hydrocarbon radical that is interrupted by at least one amine group $-NR_m-$in which $R_m$ is hydrogen, a radical Q mentioned above or a radical of formula

Q-CP'- (6),

wherein Q is as defined above, and CP' is a bivalent copolymer fragment comprising at least two of the above-mentioned segments A, B, T and U; provided that in the copolymer fragments CP and CP' a segment A or B is followed by a segment T or U in each case; provided that in the copolymer fragments CP and CP' a segment T or U is followed by a segment A or B in each case: provided that the radical Q in formulae (1) and (6) is bonded to a segment A or B in each case; and provided that the N atom of $-NR_m-$ is bonded to a segment T or U when $R_m$ is a radical of formula (6).

In accordance with the invention, an increased production yield is intended to describe that the yield of contact lens production is increased by adding a mold releasing agent in a lens-forming composition. An "improved lens quality" is intended to describe that the quality of produced contact lenses is improved in the presence of a mold releasing agent in a lens-forming composition as compared to that in the absence of the mold releasing agent. An "intact interfacial film" is intended to describe an interfacial film which is formed at an mold/composition interface and capable of reducing disparity (or variation) in (measured) mold separation force relative to the averaged mold separation force (i.e., standard deviation), preferably to a value of about 10 N or less, preferably 7.5 N or less, even more preferably 5 N or less.

In accordance with the present invention, a fluid composition is a solution or a solvent-free liquid or melt at a

temperature below about 60°C. A fluid composition can optionally further include various components, such as photoinitiator, visibility tinting agent, fillers, and the like. A fluid composition of the invention can further include other components, such as a photoinitiator, a visibility tinting agent, a filler, a antimicrobial agent, a lubricant, a UV-blocking agent, a photosensitizer, or a mixture thereof.

In accordance with the invention, an entanglement can be characterized by determining the diffusion dynamics of the non-crosslinkable hydrophilic polymer in the polymer matrix of a lens as known to a person skilled in the art.

A solution of a lens-forming material can be prepared by dissolving the lens-forming material in any suitable solvent known to a person skilled in the art. Examples of suitable solvents are water, alcohols, such as lower alkanols (e.g., ethanol, methanol or isopropanol), carboxylic acid amides (e.g., dimethylformamide), dipolar aprotic solvents, such as dimethyl sulfoxide or methyl ethyl ketone, ketones (e.g., acetone or cyclohexanone), hydrocarbons (e.g., toluene, ethers, THF, dimethoxyethane or dioxane), and halogenated hydrocarbons (e.g., trichloroethane), and mixtures of suitable solvents (e.g., mixtures of water with an alcohol, a water/ethanol or a water/methanol mixture).

A preferred group of lens-forming materials are prepolymers which are water-soluble and/or meltable. It would be advantageous that a lens-forming material comprises primarily one or more prepolymers which are preferably in a substantially pure form (e.g., purified by ultrafiltration). Therefore, after crosslinking/polymerizing by actinic radiation, a contact lens may require practically no more subsequent purification, such as complicated extraction of unpolymerized constituents. Furthermore, crosslinking/polymerizing may take place solvent-free or in aqueous solution, so that a subsequent solvent exchange or the hydration step is not necessary.

In accordance with the invention, the criterion that the prepolymer is soluble in water denotes in particular that the prepolymer is soluble in a concentration of approximately from 3 to 90 % by weight, preferably approximately from 5 to 60 % by weight, especially approximately from 10 to 60 % by weight, in a substantially aqueous solution. Insofar as it is possible in an individual case, prepolymer concentrations of more than 90 % are also included in accordance with the invention. Especially preferred concentrations of the prepolymer in solution are from approximately 15 to approximately 50 % by weight, especially from approximately 15 to approximately 45 % by weight, for example from approximately 25 % to approximately 45 % by weight.

Examples of preferred actinically crosslinkable prepolymers include, but are not limited to, a water-soluble crosslinkable polyurea prepolymer described in US Patent No. 6,479,587 or in U.S. Patent Application publication No. 2005/0113549 A1

A crosslinkable prepolymer of formula (1) is obtained by introducing ethylenically unsaturated groups into an amine- or isocyanate-capped polyurea, which preferably is a copolymerization product of a mixture comprising (a) at least one poly(oxyalkylene)diamine, (b) at least one organic poly-amine, (c) at least one diisocyanate, and (d) optionally at least one polyisocyanate. More preferably, the amine- or isocyanate-capped polyurea is a copolymerization product of a mixture comprising (a) at least one poly(oxyalkylene)diamine, (b) at least one organic di- or poly-amine (preferably triamine), (c) at least one diisocyanate.

Examples of preferred poly(oxyalkylene)diamine include so-called Jeffamines® having an average molecular weight of, for example, approximately from 200 to 5000.

Diisocyanate can be a linear or branched $C_3$-$C_{24}$ aliphatic diisocyanate, a $C_5$-$C_{24}$ cycloaliphatic or aliphatic-cycloaliphatic diisocyanate, or a $C_6$-$C_{24}$ aromatic or araliphatic diisocyanate. Examples of especially preferred diisocyanates are isophorone diisocyanate (IPDI), 4,4'-methylenebis(cyclohexyl isocyanate), toluylene-2,4-diisocyanate (TDI), 1,6-diisocyanato-2,2,4-trimethyl-n-hexane (TMDI), methylenebis(cyclohexyl-4-isocyanate), methylenebis(phenyl-isocyanate) or hexamethylene-diisocyanate (HMDI).

An organic diamine can be a linear or branched $C_2$-$C_{24}$ aliphatic diamine, a $C_5$-$C_{24}$ cycloaliphatic or aliphatic-cycloaliphatic diamine, or a $C_6$-$C_{24}$ aromatic or araliphatic diamine. A preferred organic diamine is bis(hydroxyethylene) ethylenediamine (BHEEDA) or others.

Examples of preferred polyamines are symmetrical or asymmetrical dialkylenetriamines or trialkylenetetramines. Preferred polyamines include without limitation diethylenetriamine, N-2'-aminoethyl-1,3-propylenediamine, N, N-bis(3-aminopropyl)-amine, N,N-bis(6-aminohexyl)amine and triethylenetetramine.

A polyisocyanate can be a linear or branched $C_3$-$C_{24}$ aliphatic polyisocyanate, a $C_5$-$C_{45}$ cycloaliphatic or aliphatic-cycloaliphatic polyisocyanate, or a $C_6$-$C_{24}$ aromatic or araliphatic polyisocyanate. Preferably, a polyisocyanate is a $C_6$-$C_{45}$ cycloaliphatic or aliphatic-cycloaliphatic compound containing 3-6 isocyanate groups and at least one heteroatom selected from the group consisting of oxygen and nitrogen. More preferably, a polyisocyanate is a compound having a group of formula (7):

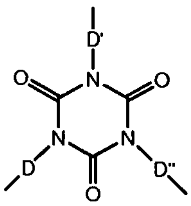

(7)

wherein D, D' and D" independent of one another are a linear or branched divalent $C_1$-$C_{12}$ alkyl radical, a divalent $C_5$-$C_{14}$ alkylcycloalkyl radical. Examples of preferred triisocyanates include without limitation the isocyanurate trimer of hexamethylene diisocyanate, 2,4,6-toluene triisocyanate, p, p', p"-triphenylmethane triisocyanate, and the trifunctional trimer (isocyanurate) of isophorone diisocyanate.

It is advantageous that the amine- or isocyanate-capped polyurea is an amine-capped polyurea which may allow the second step reaction to be carried out in an aqueous medium.

A crosslinkable polyurea prepolymer of the invention can be prepared in a manner known to person skilled in the art, for example in a two-step process. In the first step, an amine- or isocyanate-capped polyurea of the invention is prepared by reacting together a mixture comprising (a) at least one poly(oxyalkylene)diamine, (b) at least one organic di- or poly-amine, (c) at least one diisocyanate, and (d) at least one polyisocyanate. In the second step, a multifunctional compound having at least one ethylenically unsaturated group and a function group coreactive with the capping amine or isocyanate groups of the amine- or isocyanate-capped polyurea obtained in the first step.

The first step reaction is advantageously carried out in an aqueous or aqueous-organic medium or organic solvent (e.g, ethyllactate, THF, isopropanol, or the like). A suitable medium has been found to be especially a mixture of water and a readily water-soluble organic solvent, e.g. an alkanol, such as methanol, ethanol or isopropanol, a cyclic ether, such as tetrahydrofuran (THF), or a ketone, such as acetone. An especially suitable reaction medium is a mixture of water and a readily water-soluble solvent having a boiling point of from 50 to 85°C, preferably from 50 to 70°C, especially a water/tetrahydrofuran or a water/acetone mixture.

The reaction temperature in the first reaction step of the process is, for example, from -20 to 85°C, preferably from -10 to 50°C and most preferably from -5 to 30°C.

The reaction times in the first reaction step of the process may vary within wide limits, a time of approximately from 1 to 10 hours, preferably from 2 to 8 hours and most preferably 2 to 3 hours having proved practicable.

It is understood that a microreactor system can be used to prepare a prepolymer of the invention. Where a microreactor system is used, the reaction time can be greatly shortened to minutes.

In accordance with a preferred embodiment of the invention, a lens-forming material is composed of primarily one or more prepolymers and optionally additional vinylic monomers. Crosslinking or polymerizing is preferably effected whilst solvent-free or essentially solvent-free or directly from an aqueous solution or a mixture of water and a water-miscible organic solvent. The prepolymer is preferably in a substantially pure form, for example, as obtained by a purification step, such as ultrafiltration. For example, crosslinking or polymerizing may be undertaken from an aqueous solution containing about 15 to 90% of one or more prepolymers.

The vinylic monomer which may be additionally used for photo-crosslinking or polymerizing in accordance with the invention may be hydrophilic, hydrophobic or may be a mixture of a hydrophobic and a hydrophilic vinylic monomer. Suitable vinylic monomers include especially those normally used for the manufacture of contact lenses. A "hydrophilic vinylic monomer" refers to a monomer which as a homopolymer typically yields a polymer that is water-soluble or can absorb at least 10 percent by weight water. A "hydrophobic vinylic monomer" refers to a monomer which as a homopolymer typically yields a polymer that is insoluble in water and can absorb less than 10 percent by weight water.

It is preferable to use a hydrophobic vinylic monomer, or a mixture of a hydrophobic vinylic monomer with a hydrophilic vinylic monomer, whereby this mixture contains at least 50 percent by weight of a hydrophobic vinyl comonomer. In this way, the mechanical properties of the resultant polymer may be improved without the water content dropping substantially. Both conventional hydrophobic vinylic monomers and conventional hydrophilic vinylic monomers are suitable for copolymerization with the prepolymers.

Suitable hydrophobic vinylic monomers include, without limitation, $C_1$-$C_{18}$-alkylacrylates and - methacrylates, $C_3$-$C_{18}$ alkylacrylamides and -methacrylamides, acrylonitrile, methacrylonitrile, vinyl-$C_1$-$C_{18}$-alkanoates, $C_2$-$C_{18}$-alkenes, $C_2$-$C_{18}$-halo-alkenes, styrene, $C_1$-$C_6$-alkylstyrene, vinylalkylethers in which the alkyl moiety has 1 to 6 carbon atoms, $C_2$-$C_{10}$-perfluoralkyl-acrylates and -methacrylates or correspondingly partially fluorinated acrylates and methacrylates, $C_3$-$C_{12}$-perfluoralkyl-ethyl-thiocarbonylaminoethyl-acrylates and -methacrylates, acryloxy and methacryloxy-alkylsiloxanes, N-vinylcarbazole, $C_1$-$C_{12}$-alkylesters of maleic acid, fumaric acid, itaconic acid, mesaconic acid and the like. Preference is given e.g. to $C_1$-$C_4$-alkylesters of vinylically unsaturated carboxylic acids with 3 to 5 carbon atoms or vinylesters of carboxylic acids with up to 5 carbon atoms.

Suitable hydrophilic vinylic monomers include, without limitation, hydroxy-substituted lower alkylacrylates and -methacrylates, acrylamide, methacrylamide, lower alkyl-acrylamides and -methacrylamides, ethoxylated acrylates and methacrylates, hydroxy-substituted lower alkyl-acrylamides and -methacrylamides, hydroxy-substituted lower alkylvinyl-ethers, sodium ethylene sulphonate, sodium styrene sulphonate, 2-acrylamido-2-methyl-propane-sulphonic acid, N-vinyl pyrrole, N-vinyl succinimide, N-vinyl pyrrolidone, 2- or 4-vinyl pyridine, acrylic acid, methacrylic acid, amino- (whereby the term "amino" also includes quaternary ammonium), mono-lower-alkylamino- or di-lower-alkylamino-lower-alkyl-acrylates and - methacrylates, allyl alcohol and the like. Preference is given e.g. to hydroxy-substituted $C_2$-$C_4$-alkyl(meth) acrylates, five- to seven-membered N-vinyl-lactams, N,N-di-$C_1$-$C_4$-alkyl-methacrylamides and vinylically unsaturated carboxylic acids with a total of 3 to 5 carbon atoms.

Preferred hydrophobic vinylic monomers are methyl methacrylate and vinyl acetate. Preferred hydrophilic vinylic comonomers are 2-hydroxyethyl methacrylate, N-vinyl pyrrolidone and acrylamide.

To facilitate the photocrosslinking and/or polymerizing process, it is desirable to add a photoinitiator, which can initiate radical crosslinking and/or polymerizing. Exemplary photoinitators suitable for the present invention include benzoin methyl ether, 1-hydroxycyclohexylphenyl ketone, Durocure® 1173 and Irgacure® photoinitators. Preferably, up to about 0.15%, based on the total weight of the polymerizable formulation, of a photoinitiator is used.

In accordance with the invention, a non-crosslinkable hydrophilic polymer refers to a hydrophilic polymer without ethylenically unsaturated group(s). Any non-crosslinkable hydrophilic polymers can be used in the invention, so long it has a limited miscibility with a lens-forming material in a fluid composition sufficient to form an intact interfacial film at the interface between the mold and the fluid composition within a reasonable time period (for example, less than about 2 minutes, preferably less than about 1 minute, more preferably less than about 30 seconds, even more preferably less than about 20 seconds) and with a sufficient thickness to reduce averaged mold separation force and it has a structure that minimizes entanglement of the non-crosslinkable hydrophilic polymer in the interfacial film with the polymer matrix of the formed lens.

In accordance with the invention, the limited miscibility of a non-crosslinkable hydrophilic polymer with a lens-forming material in a fluid composition can be characterized by at least one of two measurable properties, cloud point and dynamic surface tension.

In accordance with the invention, the cloud point of a fluid composition in the presence of a non-crosslinkable hydrophilic polymer at a concentration of about 2% by weight is preferably from about 30 °C to about 60 °C.

In accordance with the invention, a fluid composition in the presence of a non-crosslinkable hydrophilic polymer at a concentration of about 2% by weight preferably has an inverted decay rate constant (k) of preferably about 40 seconds or less, more preferably about 35 seconds or less, even more preferably about 30 seconds or less for the decay of dynamic surface tension (i.e., at a water/air surface).

Typically, adsorption of molecules at (air/water) surface is a first order kinetic process, (i.e., the dynamic surface tension ($\sigma_d$) at a time after the formation of a new surface can.be expressed by the following equation

$$\sigma_d = \sigma_0 + \Delta_d^o \exp(-t/k)$$

in which $\sigma_d$ is the dynamic surface tension at time t, $\sigma_o$ is the equilibrium surface tension, $\Delta_d^o$ is total drop in dynamic surface tension (i.e., the difference between the dynamic surface tension at time zero (immediately after the formation a new surface) and the equilibrium surface tension, k is the inverted decay rate constant which can be an indicator for the migration (absorption) speed (rate) of the prepolymer at the air/formulation surface. As such, decay (decreasing) of the dynamic surface tension (or approaching the thermodynamic equilibrium surface tension) with time is also a first-order kinetic process. An inverted decay rate constant for the decay of dynamic surface tension (i.e., at a water/air surface) for a fluid composition containing 2% by weight of a non-crosslinkable hydrophilic polymer can be determined by fitting values of measured dynamic surface tension as function of time into a simple first exponential equation as shown in Example 5.

Static (also known as thermodynamic equilibrium) surface tension and dynamic surface tension can be measured according to any well known methods. For example, static surface tension can be measured according to the DuNouy Ring Method or the Wilhelmy plate method. Dynamic surface tension can be measured according to any known methods, for example, by the pendant drop technique as described in Examples, or by using SensaDyne Tensiometers.

Extent in entanglement of a non-crosslinkable hydrophilic polymer with a lens matrix can depend upon the structure and/or molecular weight of the non-crosslinkable hydrophilic polymer. With a rigid chain, a non-crosslinkable hydrophilic polymer may have less degree of entanglement. Where a non-crosslinkable hydrophilic polymer is a substantially-linear polymer, its molecular weight may be used to determine if which degree of entanglement it can have.

The non-crosslinkable hydrophilic polymer is Poly-N-Vinylpyrrolidone (PVP), which has a number average

molecular weight of from about 4000 to about 12000, preferably from about 5000 to about 9000.

The non-crosslinkable hydrophilic polymer is present in the fluid composition in an amount sufficient to form an intact interfacial film at a mold/composition interface with a thickness sufficient to reduce an averaged mold separation force by at least about 40%, preferably by at least about 50%, more preferably by at least about 60%, in comparison with that without the non-crosslinkable hydrophilic polymer (i.e., compared with the averaged mold separation force obtained when replacing the fluid composition with a control composition). The control composition comprises all components except the non-crosslinkable hydrophilic polymer of the fluid composition (i.e., free of the non-crosslinkable hydrophilic polymer).

In accordance with the invention, the averaged mold separation force is reduced to preferably about 35 N or less, more preferably about 30 N or less, even more preferably about 25 N or less.

The non-crosslinkable hydrophilic polymer can present in the fluid composition in an amount of up to 5% by weight, preferably up to 2.5% by weight, more preferably from 0.05% to 2.5% by weight, even more preferably from 0.1% to 2% by weight and in particular from 0.5% to 2% by weight, each based on the entire weight of the fluid composition.

Lens molds for making contact lenses are well known to a person skilled in the art and, for example, are employed in cast molding or spin casting. For example, a mold (for cast molding) generally comprises at least two mold sections (or portions) or mold halves, i.e. first and second mold halves. The first mold half defines a first molding (or optical) surface and the second mold half defines a second molding (or optical) surface. The first and second mold halves are configured to receive each other such that a lens forming cavity is formed between the first molding surface and the second molding surface. The molding surface of a mold half is the cavity-forming surface of the mold and in direct contact with lens-forming material.

Methods of manufacturing mold sections for cast-molding a contact lens are generally well known to those of ordinary skill in the art. The process of the present invention is not limited to any particular method of forming a mold. In fact, any method of forming a mold can be used in the present invention. The first and second mold halves can be formed through various techniques, such as injection molding or lathing. Examples of suitable processes for forming the mold halves are disclosed in U.S. Patent Nos. 4,444,711 to Schad; 4,460,534 to Boehm et al.; 5,843,346 to Morrill; and 5,894,002 to Boneberger et al.

Virtually all materials known in the art for making molds can be used to make molds for making contact lenses. For example, polymeric materials, such as polyethylene, polypropylene, polystyrene, PMMA, Topas® COC grade 8007-S10 (clear amorphous copolymer of ethylene and norbornene, from Ticona GmbH of Frankfurt, Germany and Summit, New Jersey), or the like can be used. Other materials that allow UV light transmission could be used, such as quartz glass and sapphire.

A person skilled in the art will know well how to actinically or thermally crosslink and/or polymerize (i.e., cure) the lens-forming material within the lens-forming cavity to form the contact lens.

In a preferred embodiment, where a fluid composition is a solution, solvent-free liquid, or melt of one or more prepolymers optionally in presence of other components, reusable molds are used and the lens-forming material is cured actinically under a spatial limitation of actinic radiation to form a contact lens. Examples of preferred reusable molds are those disclosed in U.S. patent application Nos. 08/274,942 filed July 14, 1994, 10/732,566 filed December 10, 2003, 10/721,913 filed November 25, 2003, and U.S. Patent No. 6,627,124.

In this case, a fluid composition is put into a mold consisting of two mold halves, the two mold halves not touching each other but having a thin gap of annular design arranged between them. The gap is connected to the mold cavity, so that excess lens material can flow away into the gap. Instead of polypropylene molds that can be used only once, it is possible for reusable quartz, glass, sapphire molds to be used, since, following the production of a lens, these molds can be cleaned rapidly and effectively off the uncrosslinked prepolymer and other residues, using water or a suitable solvent, and can be dried with air. Reusable molds can also be made of Topas® COC grade 8007-S10 (clear amorphous copolymer of ethylene and norbornene) from Ticona GmbH of Frankfurt, Germany and Summit, New Jersey. Because of the reusability of the mold halves, a relatively high outlay can be expended at the time of their production in order to obtain molds of extremely high precision and reproducibility. Since the mold halves do not touch each other in the region of the lens to be produced, i.e. the cavity or actual mold faces, damage as a result of contact is ruled out. This ensures a high service life of the molds, which, in particular, also ensures high reproducibility of the contact lenses to be produced.

The two opposite surfaces (anterior surface and posterior surface) of a contact lens are defined by the two molding surfaces while the edge is defined by the spatial limitation of actinic irradiation rather than by means of mold walls. Typically, only the lens-forming material within a region bound by the two molding surfaces and the projection of the well defined peripheral boundary of the spatial limitation is crosslinked whereas any lens-forming material outside of and immediately around the peripheral boundary of the spatial limitation is not crosslinked, and thereby the edge of the contact lens should be smooth and precise duplication of the dimension and geometry of the spatial limitation of actinic radiation. Such method of making contact lenses are described in U.S. patent application Nos. 08/274,942 filed July 14, 1994, 10/732,566 filed December 10, 2003, 10/721,913 filed November 25, 2003, and U.S. Patent No. 6,627,124.

A spatial limitation of actinic radiation (or the spatial restriction of energy impingement) can be effected by masking for a mold that is at least partially impermeable to the particular form of energy used, as illustrated in U.S. patent application Nos. 08/274,942 filed July 14, 1994 and U.S. Patent No. 6,627,124 or by a mold that is highly permeable, at least at one side, to the energy form causing the crosslinking and that has mold parts being impermeable or of poor permeability to the energy, as illustrated in U.S. patent application Nos. 10/732,566 filed December 10, 2003, 10/721,913 filed November 25, 2003 and U.S. Patent No. 6,627,124.

The energy used for the crosslinking is radiation energy, especially UV radiation, gamma radiation, electron radiation or thermal radiation, the radiation energy preferably being in the form of a substantially parallel beam in order on the one hand to achieve good restriction and on the other hand efficient use of the energy.

A mold can be opened according to any suitable methods known to a person skilled in the art. A mold is separated into a male mold half and a female mold half, with the molded lens adhered to one of the two mold halves. After opening the mold, the lens is dislodged (removed) from its adhering mold half and can be subjected to one or more of the following known processes, extraction, surface treatment (e.g., plasma coating, LbL coating, corona treatment, etc.), hydration, equilibration, packaging, and sterilization (e.g., autoclave).

A "surface treatment" is intended to describe a process in which a lens has been treated by means of contact with a vapor or liquid, and/or by means of application of an energy source and as such, (1) a coating is applied to the surface of the lens, (2) chemical species are adsorbed onto the surface of the lens, (3) the chemical nature (e.g., electrostatic charge) of chemical groups on the surface of the lens are altered, or (4) the surface properties of the are otherwise modified. Exemplary surface treatment processes include, but are not limited to, a surface treatment by energy (e.g., a plasma, a static electrical charge, irradiation, or other energy source), chemical treatments, the grafting of hydrophilic monomers or macromers onto the surface of an article, and layer-by-layer (LbL coating) deposition of polyelectrolytes. A preferred class of surface treatment processes are plasma processes, in which an ionized gas is applied to the surface of an article. Plasma gases and processing conditions are described more fully in U.S. Pat. Nos. 4,312,575 and 4,632,844. The plasma gas is preferably a mixture of lower alkanes and nitrogen, oxygen or an inert gas.

"LbL coating", as used herein, refers to a coating that is not covalently attached to an article, preferably a medical device, and is obtained through a layer-by-layer ("LbL") deposition of polyionic (or charged) and/or non-charged materials on an article. An LbL coating can be composed of one or more layers, preferably one or more bilayers.

The term "bilayer" is employed herein in a broad sense and is intended to encompass: a coating structure formed on a medical device by alternatively applying, in no particular order, one layer of a first polyionic material (or charged material) and subsequently one layer of a second polyionic material (or charged material) having charges opposite of the charges of the first polyionic material (or the charged material); or a coating structure formed on a medical device by alternatively applying, in no particular order, one layer of a first charged polymeric material and one layer of a non-charged polymeric material or a second charged polymeric material. It should be understood that the layers of the first and second coating materials (described above) may be intertwined with each other in the bilayer.

Formation of an LbL coating on a medical device, in particular, an ophthalmic device, may be accomplished in a number of ways, for example, as described in commonly-owned US Patent Ser. No. 6,451,871 and commonly-owned pending U.S. patent applications (Appl. Nos. 09/774942, 09/775104, 10/654,566). One coating process embodiment involves solely dip-coating and dip-rinsing steps. Another coating process embodiment involves solely spray-coating and spray-rinsing steps. However, a number of alternatives involve various combinations of spray- and dip-coating and rinsing steps may be designed by a person having ordinary skill in the art.

In accordance with the present invention, the non-crosslinkable hydrophilic polymer is present in an amount sufficient to provide an averaged mold separation force of about 40 N or less and a disparity of about 10 N or less in mold separation force, thereby leading to an increased production yield and an improved lens quality. When averaged mold separation force is about 30 N or lower, defects such as cracks, flaws and/or tears occurred during mold opening can be minimized. Disparity in individual mold separation force can also be important factor. Wide disparity in individual mold separation force can lead to a certain percentage of defects (e.g., cracks, flaws and/or tears) due to those individual mold separation forces much higher than the averaged mold separation force.

The previous disclosure will enable one having ordinary skill in the art to practice the invention. In order to better enable the reader to understand specific embodiments and the advantages thereof, reference to the following examples is suggested.

<u>Example 1</u>

*Preparation of Contact Lenses*

Typically 45-65 mg of a polymerizable fluid composition (lens formulation) is charged into the cavity of a female mold half and a male mold half is placed on top of the female mold half to form a mold assembly which is disclosed in detail in US Patent No. 6,203,909 B1.

UV light is impinged on the mold arrangement. The light source is a UV-IQ400 manufactured by Dr. Groebel UV Electronic GmbH, fitted with a Phillip HPA-400/30S bulb. Light from the source is directed down a light guide and through a WG305 cut-off filter manufactured by Schott Glass. The intensity of light that passes through this optical arrangement is measured with a RM-12 radiometer manufactured by Dr. Groebel Electronic GmbH and calibrated to the manufactures' standard. The irradiation dose is controlled by using a fixed intensity of light and modulating the exposure time through the use of an automated shutter arrangement.

The mold is opened and the contact lens removed, washed with de-ionized water to remove excess unreacted formulation. The lens is placed in a small glass vial along with approximately 2.5ml of buffer solution containing sodium citrate, sodium dihydrogen citrate, sodium chloride and deionised water, such that the osmolarity of the solution is between 250 and 400 mOsm. The vial is tightly sealed. The lens is then sterilized in an air over steam autoclave at 121 °C for a 30 minutes total cycle time.

*Mold Separation Force Measurement*

Mold separation force is measured using Zwick tensile test machine (Zwick Z 2.5) and a mold assembly which is disclosed in detail in US Patent No. 6,203,909 B1. The female mold half of the mold assembly is mounted rigidly onto the bottom of the machine, the male mold half is attached to the machine with a cardanic suspension device to enable force-free alignment.

*Cloud Point Determination*

Cloud point is determined spectroscopically by monitoring the absorbance of a formulation containing a mold releasing agent at about 500 nm, using a thermostatted cell changer attachment to a UV/Vis spectrophotometer. About 1 ml of a sample in question is placed in a ½ cm x 1 cm disposable cuvette. The ½ cm pathlength is used, and the absorbance or %T is measured at 500nm while the temperature is raised from 20°C to 80°C at a rate of 0.5 K/min. Absorbance at 500nm is the y-axis for this data as a crude measure of light both absorbed and scattered away from the detector.

Example 2

This example illustrates the procedure for preparing poly(oxylakylene)-containing polyurea prepolymer.

Place 400 grams of tetrahydrofuran (THF), 250 grams of water, 84 amine group milli-equivalents (meq) of Jeffamine® XTJ501 (Hunstman Chemicals), 50 amine group meq of Jeffamine® XTJ502 (Hunstman Chemicals) and 26.8 amine group meq of bishexamethylenetriamine (Aldrich Chemicals) into a jacketed 1 L reactor and cool to an internal temperature of 0 to 5°C with agitation. A solution containing 100 isocyante group meq of isophorone diisocyanate (Aldrich Chemicals) and 26.8 isocyante group meq of VESTANAT® T1890/100 (Degussa Chemicals) in about 80 grams of THF is added dropwise, with stirring, over a period of approximately 30 minutes. Stir the reaction mixture for a further 30 minutes whilst maintaining an internal temperature of 0 to 5°C. Three additions of 21.5 grams of sodium carbonate (20% aqueous), followed by 3.4 grams of acryloyl chloride (Aldrich Chemicals) are made with approximately 30 minutes between each addition, whilst maintaining an internal temperature below 10°C. Stir the reaction mixture for a further 30 minutes whilst allowing the internal temperature to reach ambient. The reaction mixture is filtered over 17μm sintered glass filter. The product is then concentrated on a rotary evaporator to afford a solution essentially free of THF. The solution is ultrafiltered over a 1 KDa membrane until the conductivity of the permeate measures below 50 μS/cm. The solution may be purified by passing the solution through a 0.45μm Teflon membrane under pressure.

Comparative Example 3

Miracare BC-10, polyoxythylene nonylphenol (Mn ~ 441), Igepal CO-850 (MW ~ 1100), and PEG (MW ~ 1000) are tested for their efficacy in reducing mold separation force as mold releasing agents. Miracare BC-10 is a mixture of PEG80 sorbitan Laurate, Cocamidopropyl Betaine, water, Sodium trideceth sulfate, sodium lauroamphoacetate, PEG-150 distearate, sodium laureth-13 carboxylate, Quaterium-15, and tetrasodium EDTA. The composition of the formulations are prepolymer (31.373% by weight), Irgacure 2959 (0.047% by weight), CuP (0.061% by weight) and one of the above listed mold releasing agent (2% by weight). Water is added to make up the remaining percentage. Mold separation force are determined for each formulation. Reduction in MSF (compared to control) is equal to $(MSF-MSF_{control})/MSF_{control}$.

Table 1

| | MSF (N) | MSF DtDev (N) | High MSF (N) | Low MSF (N) | Reduction in MSF (%) |
|---|---|---|---|---|---|
| Control | 85.3 | 53 | 231 | 47 | |
| Miracare BC-10 | 46.4 | 10 | 65 | 31 | 46 |
| polyoxythylene nonylphenol | 91 | 64 | 292 | 54 | - |
| Igepal CO-850 | 66 | 27 | 137 | 41 | 23 |
| PEG | 59 | 14 | 80 | 38 | 31 |

Table 1 shows that averaged mold separation forces, disparity relative to the averaged mold separation force, and reduction in averaged mold separation force. None of studied mold releasing agent succeeds in reducing both the averaged mold separation force below 40 N and the disparity within 10 N.

Example 4

Formulations containing 2% by weight of a mold releasing agent listed in Table A. The other compositions of each formulations are: 31.373% by weight of prepolymer prepared according to the procedure described in Example 2, 0.047% by weight of Irgacure 2959, 0.061% by weight of CuP and water (making up the remaining percentage).

Table A

| Formulation | Mold Release Agent | MW | Formulation Appearance |
|---|---|---|---|
| A | Poly(vinyl methyl ether) | 30K | Almost clear |
| B | Glycerin | monomer | Very clear |
| C | Propylene glycol | monomer | Very clear |
| D | Dextran | 15K-20K | Translucent |
| E | Polysorbate (Tween 80) | 1310(Mn) | Little opaque |
| F | Methyl cellulose | 14K(Mn) | Translucent, some gel precipitate at syringe bottom |
| G | Cellulose, hydroxyethyl ether | 24K-27K | Almost clear, transparent gel suspending |
| H | Hydroxypropyl methyl cellulose | 10K(Mn) | Almost clear |
| I | Carboxymethyl cellulose, sodium salt | 90K (Mw) | Clear |
| | Poly(ethyleneimine) | 600 | Gel together |
| | Cellulose | | Not dissolving |
| | Gelatin | | Not dissolving, clear gel particles suspending |
| J | PVP (K15) | 9.7K, range 6K-15K | Clear |

Addition of poly(ethyleneimine) results in formation of gel. Cellulose does not dissolve in the formulation. Gelatin does not dissolve in the formulation and clear gel particles are observed to suspend in the formulation. All formulations (A-J) except these three formulations with poly(ethyleneimine), cellulose or gelatin are used to make lenses. All lenses are clear, but lenses made from formulation G have gel interfered with lens. Mold separation forces (MSFs) are determined. Results are shown in Fig. 1. Formulations A-I, as well as the three formulations with poly(ethyleneimine), cellulose or gelatin are comparative examples, whereas Formulation J is an Example according to the present invention. PVP appears to be the most effective mold releasing agent.

Example 5

*Dynamic Surface Tension - Pendant Drop Method*

A drop (having a volume of 4.0 microliters) of a formulation is formed over a period of 1.0 second on the end of a downward-pointing capillary tip (i.e., a needle with a 1.82 mm O.D., 1.52 mm I.D.). The drop is typically formed to about 90% of its detachment volume (from the capillary). The drop is then digitally imaged as function of time (in real time) and 300 points (150 pairs of two vertically separate points) along the drop surface in each images (in real time) are used to determine the mean curvature of the drop at a specific time. From one drop image, surface tension is determined at least 150 times. These surface tension values are averaged to give a single value for the overall surface tension of the drop at a specific time.

According to Laplace's equation, the pressure difference at any given point on a curved surface ($\Delta P$) is proportional to mean curvature of the surface at that point (($1/r_1$ +$1/r_2$), as defined by the following equation

$$\Delta P = (1/r_1 + 1/r_2)\ 2\ \sigma$$

in which $r_1$ and $r_2$ are the principal radii of curvature and $\sigma$ is the surface tension. For a pendant drop, the pressure difference within the drop between any two vertical positions (A and B) is:

$$\Delta P_A - \Delta P_B = \Delta\rho\ g\ Z$$

where $\Delta\rho$ is the difference in density between the liquid that is forming the drop and the bulk gas, g is the gravity constant, and Z is the vertical distance between the two positions (A and B). Combination of above equations yields the following equation for calculating surface tension.

$$(\ (1/r_1 + 1/r_2)_{at\ A} - (1/r_1 + 1/r_2)_{at\ B}\ )\ 2\ \sigma = \Delta\rho\ g\ Z$$

*Dynamic Surface Tension - Bubble Pressure Method*

The principle of bubble pressure tensiometer is that gas (usually air or nitrogen) is blown through a small capillary tube which has one end submersed in the liquid (i.e., a formulation) to be tested and the other end attached to a pressure transducer. The gas forms bubbles in the liquid which initially grow on the end of the capillary, and eventually reach a volume at which they detach. During the formation of each bubble, a maximum gas pressure is reached. The maximum pressure is reached when the bubble is a hemisphere on the capillary, with a radius equal to the radius of the capillary tip. The maximum pressure is directly related to surface tension by the following equation:

$$\sigma_d = \frac{(P_{max} - P_o) \cdot r}{2}$$

where $\sigma_d$ is measured dynamic surface tension; $P_{max}$ is the maximum pressure; $P_o$ is the hydrostatic pressure which is equal to $(\rho_L - \rho_G)$-g-d; $\rho_L$ is the density of the liquid; $\rho_G$ is the density of the gas; g is the gravity constant; d is capillary immersion depth; and r is the capillary radius.

*Preparation of formulation.* Three formulations are prepared from poly(oxyalkylen)-containing polyurea prepolymer prepared according the procedure described in Example 2, and different PVP with different molecular weights, photoinitiator (Iracure 2959), visibility tinting agent (copper phthalocyanine (CuP)), and water as shown in Table 2. Formulation I and III are Comparative Examples.

Table 2

| Formulation | Prepolymer | Initiator [1] | CuP[2] | PVP[3] | PVP[4] | PVP[5] | $H_2O$ |
|---|---|---|---|---|---|---|---|
| I | 31.373 | 0.047 | 0.061 | 1.961 | | | 66.558 |
| II | 31.373 | 0.047 | 0.061 | | 1.961 | | 66.558 |
| III | 31.373 | 0.047 | 0.061 | | | 1.961 | 66.558 |
| 1. Irgacure 2959®; 2. copper phthalocyanine; 3. MW=1,700 Da; 4. MW=8,700 Da; 5. MW=58,000 DA; | | | | | | | |

*Equilibrium Surface Tension Measurements.*

Equilibrium surface tension measurements is performed according to the Wilhelmy plate method (Krüss Processor Tensiometer K100). Two conditions are employed: "fresh" and "48 hours". "Fresh" means that a testing formulation is heated for 30 minutes in a 50°C +/-0.5°C jacketed water bath with magnetic stirring and the surface tensions are measured within two hours after coming back to room temperature. "48 HR" means that a testing formulation has been retested somewhere in the 48 hour to 50 hour window after its initial heat treatment. In this case the sample is stored at room temperature in the meantime, and has been gently stirred for 30 minutes (at room temperature) again just prior to testing.

The measured equilibrium (static) surface tension values are obtained from duplicate experiments on each of samples at each of the conditions setup and are reported in Table 3.

Formulation I and III are Comparative Examples.

Table 3

| ***Formulation*** | Condition | Static Surface Tension (mN/m) | | |
|---|---|---|---|---|
| | | Test #1 | Test #2 | Average |
| I | Fresh | 38.22 | 38.25 | 38.24 |
| | 48 HR | 37.94 | 37.95 | 37.95 |
| II | Fresh | 37.95 | 37.92 | 37.94 |
| | 48 HR | 37.69 | 37.70 | 37.68 |
| III | Fresh | 37.78 | 37.80 | 37.79 |
| | 48 HR | 37.57 | 37.44 | 37.56 |

*Dynamic Surface Tension Measurements*

The non-equilibrium surface tensions of three compositions prepared above are determined by the pendant drop technique and bubble pressure technique. It is found that the dynamic surface tension of any formulation decreases with time (i.e., decay). Data from the two measurement methods match up quite well for each sample and are fitted into a simple first order exponential equation

$$\sigma_d = \sigma_0 + \Delta_d^o \exp(-t/k)$$

where $\sigma_d$ is the dynamic surface tension at time t, $\sigma_0$ is the equilibrium surface tension, $\Delta_d^o$ is total drop in dynamic surface tension (i.e., the difference between the dynamic surface tension at time zero (immediately after the formation a new surface) and the equilibrium surface tension, k is the inverted decay rate constant which can be an indicator for the migration (absorption) speed (rate) of the prepolymer at the air/formulation surface. For all three formulations, the total drop in dynamic surface tension is about 9 mN/m. In the case of PVP with a molecular weight of 1700 Daltons (Da),

it takes more than about 300 seconds to reach the equilibrium surface tension. In the case of PVP with a molecular weight of 8700 Da, it takes less than about 200 seconds to reach the equilibrium surface tension. In the case of PVP with a molecular weight of 58000 Da, it takes less than about 60 seconds to reach the equilibrium surface tension. They all have very similar dynamic surface tension at time zero and similar equilibrium surface tension. The obtained inverted rate constants (k's) are reported in Table 4.

Formulation I and III are Comparative Examples.

Table 4

| *Formulation* | **Condition** | **k (seconds)** |
|---|---|---|
| I | Fresh | 64.79 |
| | 48 HR | 54.37 |
| II | Fresh | 28.17 |
| | 48 HR | 23.64 |
| III | Fresh | 9.11 |
| | 48 HR | 7.64 |

Example 6

Four formulations are prepared from prepolymer prepared according to the procedure described in Example 2, Irgacure 2959, CuP, and PVP K-15 (MW ~8700) and water. In all formulations, the concentration of prepolymer is constant (31.373% by weight), Irgacure 2959 concentration is constant (0.047% by weight), and CuP concentration is constant (0.061%). The concentration PVP K-15 is 0, 1.0%, 1.5%, and 2% by weight respectively. Water is added to make up the remaining percentage. The results are shown in Fig. 2.

Fig. 2 shows that without PVP K-15, the averaged mold separation force is about 63 N and mold separation force varies greatly, ranging from about 11 N to about 112 N. By adding PVP K-15, the averaged mold separation force and the disparity (variation) in mold separation force both (relative to the averaged mold separation force) are decreased substantially. Averaged mold separation force is reduced by about 61% at 1.0% PVP k-15, by about 72% at 1.5% PVP k-15, and by about 78% at 2% PVP k-15. The best results are achieved with 2% by weight of PVP K-15 present in the formulation.

Example 7

*Cloud Point of PVPs with Different Molecular Weight*

Three formulations are prepared from poly(oxyalkylen)-containing polyurea prepolymer prepared according the procedure described in Example 2, and different PVP with different molecular weights, photoinitiator (Iracure 2959), visibility tinting agent (copper phthalocyanine). The composition of each formulation is shown in Table 2. The cloud points of these three formulations are determined and the results are shown in Fig. 3. Formulation I and III are Comparative Examples. The formulation with ca. 2% by weight of PVP having a molecular weight of about 1,700 Da has a cloud point of about 70 °C (series 1); the formulation with ca. 2% by weight of PVP having a molecular weight of about 8,700 Da has a cloud point of about 48°C (series 2); and the formulation with ca. 2% by weight of PVP having a molecular weight of about 58,000 Da has a cloud point of about 40°C (series 3).

*Effects of Time Intervals between Dosing and Curing upon MSF*

Mold separation forces (MSF) for the above three formulations are determined as function of waiting time (i.e., time interval) between dosing (a lens-forming formulation in a mold) and curing (the lens-forming formulation). 10 data points are collected in the case of a waiting time of about 30 seconds and 5 data point are collected in the case of a waiting time of about 5 minutes. Results are shown in Fig. 4. Formulation I and III are Comparative Examples.

Where PVP has a lower molecular weight (1,700 Da), it seems that it barely reduces averaged mold separation force. When the waiting time is about 30 seconds, the variation (disparity) in mold separation force is huge. By prolonging

the waiting time to about 300 seconds (5 minutes), the averaged mold separation force is not reduced but the disparitiy in mold separation force is significantly reduced. It is believed that PVP with a molecular weight of about 1,700 Da may need at least about 5 minutes (see Example 5) to reach an equilibrium state at the mold/the composition interface. By waiting 30 seconds, the interfacial film under formation at the mold/composition interface may not intact so that a huge disparity in mold separation force is observed. By waiting about 5 minutes, the interfacial film at the mold/composition interface may be intact so that the disparity in mold separation force is greatly reduced. But, the interfacial film may not have a thickness sufficient to reduce averaged mold separation force.

Where PVP's molecular weight increases from 1,700 Da to 8,700 Da, the length of a waiting time (15 seconds or 5 minutes) does not alter the averaged mold separation force nor the disparity (variation) in mold separation force.

Where PVP's molecular weight increases further from 8,700 Da to 58,000 Da, the length of a waiting time (15 seconds or 5 minutes) does have any significant effects on the averaged mold separation force and the disparity (variation) in mold separation force.

Example 8

PVP K-15 in solution at 2% has a conductivity of 231 μS/cm, while water used to make the solution has 0.93 μS/cm. One portion of PVP K-15 solution is purified by ultra-filtration with a 1 kD membrane and the other portion is fractionated into three fractions as follows.

A 30% PVP solution is prepared by dissolving 60 g of PVP K-15 into 200 g of DI water. The solution is then poured into a beaker and stirred at 550 rpm. Acetone is added drop-wise to the PVP solution (total acetone - 500mL). Addition of acetone is discontinued when the solution turns from a clear yellow to a cloudy yellow-white. The solution is then poured into a separatory funnel. Over time (30 min -1 hr), the PVP solution separates from the acetone layer (top layer - cloudy yellow-white; bottom layer - clear yellow). The PVP fraction (in acetone/water) is at the bottom of the funnel, while the acetone layer is on the top of the funnel. Once the PVP fraction is separated and drained off, more acetone is added to the funnel to separate more PVP. Different PVP fractions are collected. After the fractions are collected, combinations of the samples are made. For example, fraction 1 & 2 are combined and fraction 3 & 4 are combined, etc. Next, the fractions are placed on the rotary evaporator to remove any remaining acetone. The samples are then diluted with DI water and freeze-dried.

Each of raw, purified, three fractions (Fractions I, II, and III) of PVP-K-15 is examined to determine its efficacy in reducing mold separation force (MSF). The concentration of PVP K-15 is 2% by weight and other components (prepolymer prepared according to procedure described in Example 2, initiator, CuP) have concentrations shown in Example 3. The results are shown in Fig. 5. Fraction II gives the smallest mold separation force while remaining clear. Fraction I is the highest molecular weight fraction and gives hazy lenses after autoclave and decent mold separation force. Fraction III is the lowest molecular weight fraction and gives clear lenses after autoclave and high averaged mold separation force and wide disparity in mold separation force.

MSF measurements are then performed with formulations with 1 and 1.5% of fraction II and with the purified PVP. Results are shown in Fig. 6. All lenses, except the ones with 1.5% purified PVP, are clear after autoclave. The MSF results still look very good for 1.5% fraction II.

Comparative Example 9

PEG with different molecular weights (2 kDa, 8 kDa, and 20 kDa) are used as mold releasing agent. The composition of the formulations are prepolymer (31.373% by weight), Irgacure 2959 (0.047% by weight), CuP (0.061 %) and PEG (2% by weight). Water is added to make up the remaining percentage.

Cloud points of each formulations are determined. Results are shown in Fig. 7.

MSF is determined and results are shown in Fig. 8. For PEG 2k, the cloud point is about 72°C and it is unable to significantly reduce either the averaged mold separation force and the disparity in mold separation force. These results indicate that PEG with low molecular weight has a good miscibility with poly(oxyalkylene)-containing polyurea prepolymer in water and can not successfully migrate to mold/formulation interface to form an intact interfacial film. For PEG 20K, it has a poor miscibility with poly(oxyalkylene)-containing polyurea prepolymer in water and can successfully migrate to mold/formulation interface to form an intact interfacial film. However, probably because of entanglement of PEG 20K in the interfacial film with the polymer matrix of a lens, averaged mold separation force is slightly reduced but the disparity in mold separation force is still quite large.

## Claims

**1.** A method for producing a contact lens, comprising: the steps of:

(1) introducing a fluid composition into a mold for making a contact lens, wherein the fluid composition comprises a lens-forming material and a non-crosslinkable hydrophilic polymer, wherein the lens-forming material is crosslinkable and/or polymerizable by actinic radiation or by heating, wherein the non-crosslinkable hydrophilic polymer has a limited miscibility with the lens-forming material low enough to form an intact interfacial film at interface between the mold and the fluid composition therein within a desired time period and with a thickness sufficient to reduce an averaged mold separation force;

(2) crosslinking/polymerizing the lens-forming material in the mold to form a lens having a polymer matrix, wherein the non-crosslinkable hydrophilic polymer has a structure that minimizes entanglement of the non-crosslinkable hydrophilic polymer in the interfacial film with the polymer matrix of the formed lens; and

(3) separating the mold, wherein the non-crosslinkable hydrophilic polymer is present in an amount sufficient to reduce an averaged mold separation force by at least about 40% in comparison with that without the non-crosslinkable hydrophilic polymer and to provide a disparity of about 10 N or less in mold separation force, thereby leading to an increased production yield and an improved lens quality,

**characterized in that**

the non-crosslinkable hydrophilic polymer is a poly-N-vinyl pyrrolidone (PVP) with a number average molecular weight of from about 4000 to about 12000, and

the lens-forming material comprises at least one prepolymer, wherein the prepolymer is a water-soluble crosslinkable polyurea prepolymer having a formula (1)

$$CP\text{-}(Q)_q \qquad (1)$$

wherein q is an integer of ≥3, Q is an organic radical that comprises at least one crosslinkable group, CP is a multivalent branched copolymer fragment comprising segments A and U and optionally segments B and T, wherein: A is a bivalent radical of formula

$$-NR_A\text{-} A_1\text{-}NR_A'\text{-} \qquad (2),$$

wherein $A_1$ is the bivalent radical of $-(R_{11}\text{-}O)_n\text{-}(R_{12}\text{-}O)_m\text{-}(R_{13}\text{-}O)_p\text{-}$, a linear or branched $C_2$-$C_{24}$ aliphatic bivalent radical, a $C_5$-$C_{24}$ cycloaliphatic or aliphatic-cycloaliphatic bivalent radical, or a $C_6$-$C_{24}$ aromatic or araliphatic bivalent radical, $R_{11}$, $R_{12}$, $R_{13}$, independently of one other, are each linear or branched $C_2$-$C_4$-alkylene or hydroxy-substituted $C_2$-$C_8$ alkylene radical, n, m and p, independently of one another, are each a number from 0 to 100, provided that the sum of (n+m+p) is 5 to 1000, and $R_A$ and $R_A'$ independently of each other is hydrogen, an unsubstituted $C_1$-$C_6$alkyl, a substituted $C_1$-$C_6$alkyl, or a direct, ring-forming bond;

T is a bivalent radical of formula

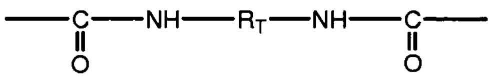

(3),

wherein $R_T$ is a bivalent aliphatic, cycloaliphatic, aliphatic-cycloaliphatic, aromatic, araliphatic or aliphatic-heterocyclic radical;

U is a trivalent radical of formula

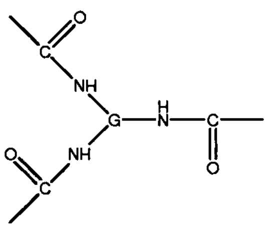

(4),

wherein G is a linear or branched $C_3$-$C_{24}$ aliphatic trivalent radical, a $C_5$-$C_{45}$ cycloaliphatic or aliphatic-cycloaliphatic trivalent radical, or a $C_3$-$C_{24}$ aromatic or araliphatic trivalent radical;

B is a radical of formula

$$-NR_B\text{-}B_1\text{-}NR_B'\text{-} \qquad (5),$$

wherein $R_B$ and $R_B$' independently of each other is hydrogen, an unsubstituted $C_1$-$C_6$alkyl, a substituted $C_1$-$C_6$alkyl, or a direct, ring-forming bond, $B_1$ is a bivalent aliphatic, cycloaliphatic, aliphatic-cycloaliphatic, aromatic or araliphatic hydrocarbon radical that is interrupted by at least one amine group -$NR_m$- in which $R_m$ is hydrogen, a radical Q mentioned above or a radical of formula

Q-CP'- (6),

wherein Q is as defined above, and CP' is a bivalent copolymer fragment comprising at least two of the above-mentioned segments A, B, T and U; provided that in the copolymer fragments CP and CP' a segment A or B is followed by a segment T or U in each case; provided that in the copolymer fragments CP and CP' a segment T or U is followed by a segment A or B in each case; provided that the radical Q in formulae (1) and (6) is bonded to a segment A or B in each case; and provided that the N atom of -$NR_m$- is bonded to a segment T or U when $R_m$ is a radical of formula (6).

**2.** The method of claim 1, wherein the step of crosslinking and/or polymerizing is performed under a spatial limitation of actinic radiation to form a contact lens having a first surface, an opposite second surface, and an edge, wherein the mold is a reusable mold having two molding surfaces, wherein the first and second surfaces are defined by the two molding surface, and the edge is defined by the spatial limitation of actinic radiation.

## Patentansprüche

**1.** Verfahren zur Herstellung einer Kontaktlinse umfassend die Schritte:

(1) Einbringen einer fluiden Zusammensetzung in eine Form zur Herstellung einer Kontaktlinse,
wobei die fluide Zusammensetzung ein linsenbildendes Material und ein nichtvernetzbares hydrophiles Polymer enthält,
wobei das linsenbildende Material mittels aktinischer Strahlung oder Erhitzen vernetzbar und/oder polymerisierbar ist,
wobei das nichtvernetzbare hydrophile Polymer eine begrenzte Mischbarkeit mit dem linsenbildenden Material hat die niedrig genug ist innerhalb einer gewünschten Zeitdauer und mit einer für die Reduktion der durchschnittlichen Formtrennkräfte ausreichenden Dicke einen intakten Grenzflächenfilm an der Grenzfläche zwischen der Form und der fluiden Zusammensetzung zu bilden;
(2) Vernetzen/Polymerisieren des linsenbildenden Materials in der Form zur Bildung einer Linse mit einer Polymermatrix, wobei das nichtvernetzbare hydrophile Polymer eine Struktur hat die Verschlingungen des nichtvernetzbaren hydrophilen Polymers im Grenzflächenfilm mit der Polymermatrix der gebildeten Linse minimiert; und
(3) Trennen der Form, wobei das nichtvernetzbare hydrophile Polymer in einer ausreichenden Menge vorhanden ist um die durchschnittlichen Formtrennkräfte um etwa 40% im Vergleich zur Situation ohne nichtvernetzbares hydrophiles Polymer zu reduzieren und eine Abweichung der Formtrennkräfte von etwa 10 N oder weniger zu ermöglichen, was zu einer höheren Verfahrensausbringung und einer verbesserten Linsenqualität führt,

**dadurch gekennzeichnet, dass**
das nichtvernetzbare hydrophile Polymer ein Poly-N-Vinylpyrrolidon (PVP) ist mit einem zahlenmittleren Molekulargewicht von etwa 4000 bis etwa 12000, und wobei das linsenbildende Material mindestens ein Präpolymer enthält, wobei das Präpolymer ein wasserlösliches vernetzbares Polyharnstoff-Präpolymer mit der Formel (1) ist

$CP\text{-}(Q)_q$ (1)

wobei q eine Zahl ≥3 ist, Q ein organisches Radikal ist das mindestens eine vernetzbare Gruppe enthält, CP ein mehrwertiges verzweigtes Copolymerfragment ist das Segmente A und U und wahlweise Segmente B und T enthält, wobei: A ein zweiwertiges Radikal der Formel

$-NR_A\text{-}A_1\text{-}NR_A'\text{-}$ (2)

ist,
wobei $A_1$ das zweiwertige Radikal $-(R_{11}\text{-}O)_n\text{-}(R_{12}\text{-}O)_{m}\text{-}(R_{13}\text{-}O)_p\text{-}$, ein lineares oder verzweigtes $C_2$-$C_{24}$ aliphatisches

zweiwertiges Radikal, ein $C_5$-$C_{24}$ cycloaliphatisches oder aliphatisch-cycloaliphatisches zweiwertiges Radikal, oder ein $C_6$-$C_{24}$ aromatisches oder araliphatisches zweiwertiges Radikal ist, $R_{11}$, $R_{12}$, $R_{13}$ sind jeweils unabhängig voneinander lineare oder verzweigte $C_2$-$C_4$-Alkylen- oder Hydroxy-substituierte $C_2$-$C_8$ Alkylen-Radikale, n, m und p sind unabhängig voneinander jeweils eine Zahl von 0 bis 100, wobei die Summe (n+m+p) von 5 bis 1000 ist, und $R_A$ und $R_A$' sind unabhängig voneinander Wasserstoff, ein unsubstituiertes $C_1$-$C_6$Alkyl, ein substituiertes $C_1$-$C_6$Alkyl, oder eine direkte, ringbildende Bindung;

T ist ein zweiwertiges Radikal der Formel

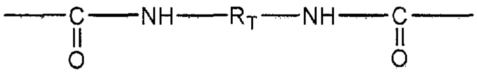

(3),

wobei $R_T$ ein zweiwertiges aliphatisches, cycloaliphatisches, aliphatisch-cycloaliphatisches, aromatisches, araliphatisches oder aliphatisch-heterocyclisches Radikal ist;

U ist ein dreiwertiges Radikal der Formel

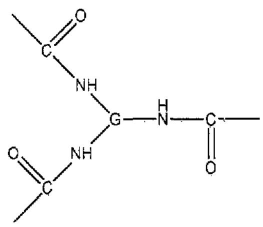

(4),

wobei G ein lineares oder verzweigtes $C_3$-$C_{24}$ aliphatisches dreiwertiges Radikal, ein $C_5$-$C_{45}$ cycloaliphatisches oder aliphatisch-cycloaliphatisches dreiwertiges Radikal, oder ein $C_3$-$C_{24}$ aromatisches oder araliphatisches dreiwertiges Radikal ist;

B ist ein Radikal der Formel

$$NR_B\text{-} B_1\text{-}NR_B'\text{-} \quad (5),$$

wobei $R_B$ und $R_B$' unabhängig voneinander Wasserstoff, ein unsubstituiertes $C_1$-$C_6$ Alkyl, ein substituiertes $C_1$-$C_6$ Alkyl, oder eine direkte, ringbildende Bindung sind, $B_1$ ist ein zweiwertiges aliphatisches, cycloaliphatisches, aliphatisch-cycloaliphatisches, aromatisches oder araliphatisches Kohlenwasserstoff-Radikal, das von mindestens einer Amingruppe -$NR_m$- unterbrochen ist in der $R_m$ Wasserstoff, ein oben genanntes Radikal Q oder ein Radikal der Formel

$$Q\text{-}CP'\text{-} \quad (6)$$

ist,

wobei Q wie oben definiert ist, und CP' ein zweiwertiges Copolymerfragment ist welches mindestens zwei der oben genannten Segmente A, B, T und U enthält; mit dem Vorbehalt dass in Copolymerfragmenten CP und CP' auf ein Segment A oder B in jedem Fall ein Segment T oder U folgt; mit dem Vorbehalt dass in Copolymerfragmenten CP und CP' auf ein Segment T oder U in jedem Fall ein Segment A oder B folgt; mit dem Vorbehalt, dass das Radikal Q in Formeln (1) und (6) in jedem Fall an ein Segment A oder B gebunden ist; und mit dem Vorbehalt dass das N-Atom des -$NR_m$- an ein Segment T oder U gebunden ist wenn $R_m$ ein Radikal der Formel (6) ist.

**2.** Verfahren gemäß Anspruch 1, wobei der Schritt des Vernetzens und/oder Polymerisierens unter einer räumlichen Begrenzung aktinischer Strahlung durchgeführt wird um eine Kontaktlinse zu bilden mit einer ersten Oberfläche, einer gegenüberliegenden zweiten Oberfläche und einem Rand, wobei die Form eine wiederverwendbare Form mit zwei Formoberflächen ist, wobei die ersten und zweiten Oberflächen durch die Formoberflächen gebildet werden, und der Rand durch die räumliche Begrenzung der aktinischen Strahlung gebildet wird.

## Revendications

**1.** Procédé de fabrication d'une lentille de contact, comprenant les étapes consistant à :

(1) introduire une composition fluide dans un moule pour fabriquer une lentille de contact, dans lequel la composition fluide comprend un matériau formant la lentille et un polymère hydrophile non réticulable, où le matériau formant la lentille est réticulable et/ou polymérisable au moyen d'un rayonnement actinique ou par chauffage, où le polymère hydrophile non réticulable est capable d'une miscibilité limitée avec le matériau formant la lentille, suffisamment faible pour former un film interfacial intact à l'interface entre le moule et la composition fluide contenue dedans en l'espace d'une période de temps voulue, et d'épaisseur suffisante pour réduire une force moyenne de séparation de moule ;

(2) réticuler / polymériser le matériau formant la lentille dans le moule pour former une lentille comportant une matrice polymère, où le polymère hydrophile non réticulable possède une structure qui minimise l'enchevêtrement du polymère hydrophile non réticulable dans le film interfacial avec la matrice polymère de la lentille formée; et

(3) séparer le moule, où le polymère hydrophile non réticulable est présent en quantité suffisante pour réduire une force de séparation moyenne du moule d'au moins environ 40 % par comparaison avec celle sans le polymère hydrophile non réticulable, et pour produire une disparité dans la force de séparation du moule de l'ordre de 10 N ou moins, générant de ce fait un rendement de production plus élevé et une qualité de lentille améliorée,

**caractérisé en ce que**
le polymère hydrophile non réticulable est une poly-N-vinylpyrrolidone (PVP) ayant un poids moléculaire moyen en nombre compris entre environ 4 000 et environ 12 000, et **en ce que**
le matériau formant la lentille comprend au moins un prépolymère, où le prépolymère est un prépolymère de polyurée réticulable et hydrosoluble répondant à la formule (1) :

$$CP\text{-}(Q)_q \qquad (1)$$

dans laquelle q est un entier ≥3, Q est un radical organique qui comprend au moins un groupe réticulable, CP est un fragment de copolymère ramifié multivalent comprenant des segments A et U et éventuellement des segments B et T,
où A est un radical bivalent répondant à la formule :

$$-NR_A\text{-}A_1\text{-}NR_{A'}\text{-} \qquad (2),$$

dans laquelle $A_1$ est le radical bivalent de $-(R_{11}\text{-}O)_n(R_{12}\text{-}O)_m\text{-}(R_{13}\text{-}O)_p\text{-}$, un radical bivalent aliphatique en $C_2$-$C_{24}$ linéaire ou ramifié, un radical bivalent aliphatique-cycloaliphatique ou cycloaliphatique en $C_5$-$C_{24}$ ou un radical bivalent araliphatique ou aromatique en $C_6$-$C_{24}$, $R_{11}$, $R_{12}$, $R_{13}$, indépendamment les uns des autres, sont chacun un radical alkylène en $C_2$-$C_4$ linéaire ou ramifié ou un radical alkylène en $C_2$-$C_8$ substitué par un hydroxy, n, m et p, indépendamment les uns des autres, sont chacun un nombre compris entre 0 et 100, sous réserve que la somme de (n+m+p) soit comprise entre 5 et 1 000, et $R_A$ et $R_A$' indépendamment l'un de l'autre sont un atome d'hydrogène, un alkyle en $C_1$-$C_6$ non substitué, un alkyle en $C_1$-$C_6$ substitué, ou une liaison directe formant un cycle ;
T est un radical bivalent répondant à la formule :

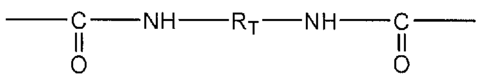

(3),

dans laquelle $R_T$ est un radical bivalent aliphatique, cycloaliphatique, aliphatique-cycloaliphatique, aromatique, araliphatique ou aliphatique-hétérocyclique ;
U est un radical trivalent répondant à la formule :

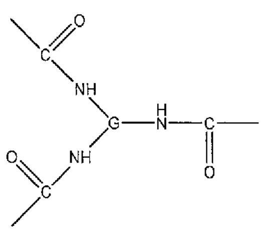

(4),

dans laquelle G est un radical trivalent aliphatique en $C_3$-$C_{24}$ linéaire ou ramifié, un radical trivalent aliphatique-cycloaliphatique ou cycloaliphatique en $C_5$-$C_{45}$ ou un radical trivalent araliphatique ou aromatique en $C_3$-$C_{24}$ ;
B est un radical répondant à la formule :

$$-NR_B-B_1-NR_B'- \quad (5),$$

dans laquelle $R_B$ et $R_B$' indépendamment l'un de l'autre sont un atome d'hydrogène, un alkyle en $C_1$-$C_6$ non substitué, un alkyle en $C_1$-$C_6$ substitué, ou une liaison directe formant un cycle, $B_1$ est un radical hydrocarboné bivalent aliphatique, cycloaliphatique, aliphatique-cycloaliphatique, aromatique ou araliphatique qui est interrompu par au moins un group amine -$NR_m$-, où $R_m$ est un atome d'hydrogène, un radical Q mentionné ci-avant ou un radical répondant à la formule :

$$Q-CP'- \quad (6),$$

dans laquelle Q est tel que défini précédemment et CP' est un fragment de copolymère bivalent comprenant au moins deux des segments mentionnés précédemment A, B, T et U; sous réserve que dans les fragments de copolymère CP et CP', un segment A ou B soit suivi d'un segment T ou U dans chaque cas ; sous réserve que dans les fragments de copolymère CP et CP' un segment T ou U soit suivi d'un segment A ou B dans chaque cas ;
sous réserve que le radical Q dans les formules (1) et (6) soit lié à un segment A ou B dans chaque cas ; et sous réserve que l'atome N de -$NR_m$- soit lié à un segment T ou U lorsque $R_m$ est un radical répondant à la formule (6).

2. Procédé selon la revendication 1, dans lequel l'étape de réticulation et/ou de polymérisation est effectuée en limitant spatialement le rayonnement actinique pour former une lentille de contact ayant une première surface, une seconde surface opposée et un bord, où le moule est un moule réutilisable ayant deux surfaces de moulage, où les première et seconde surfaces sont définies par les deux surfaces de moulage et le bord est défini par la limite spatiale du rayonnement actinique.

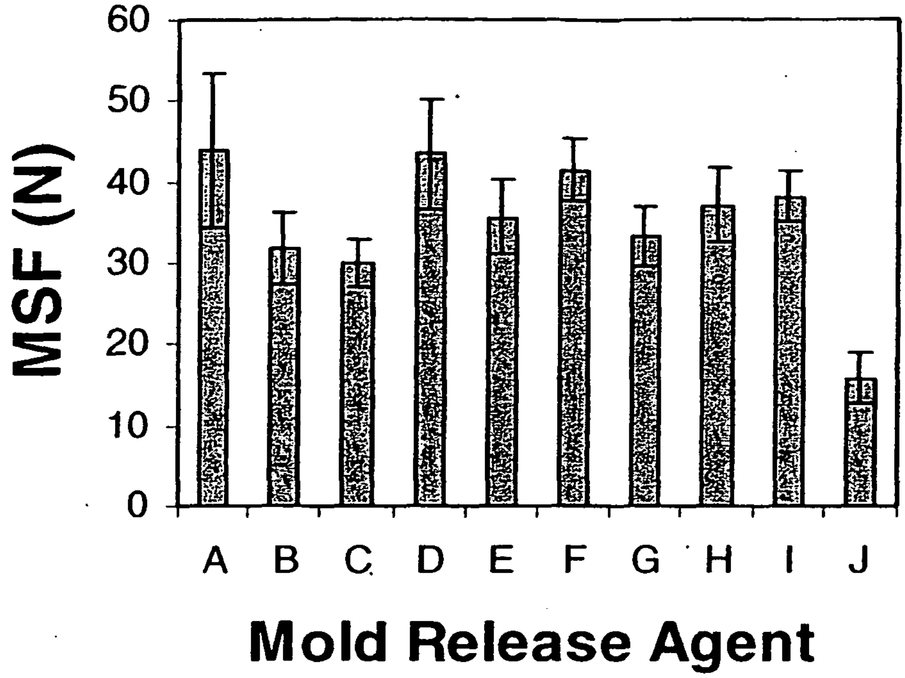


FIG. 1

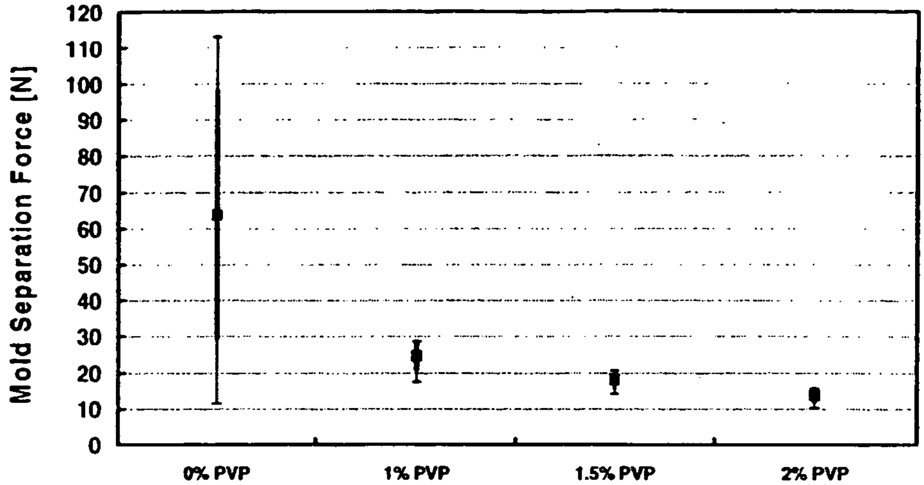
Mold Separation Force [N]
120
110
100
90
80
70
60
50
40
30
20
10
0
0% PVP
1% PVP
1.5% PVP
2% PVP

FIG. 2

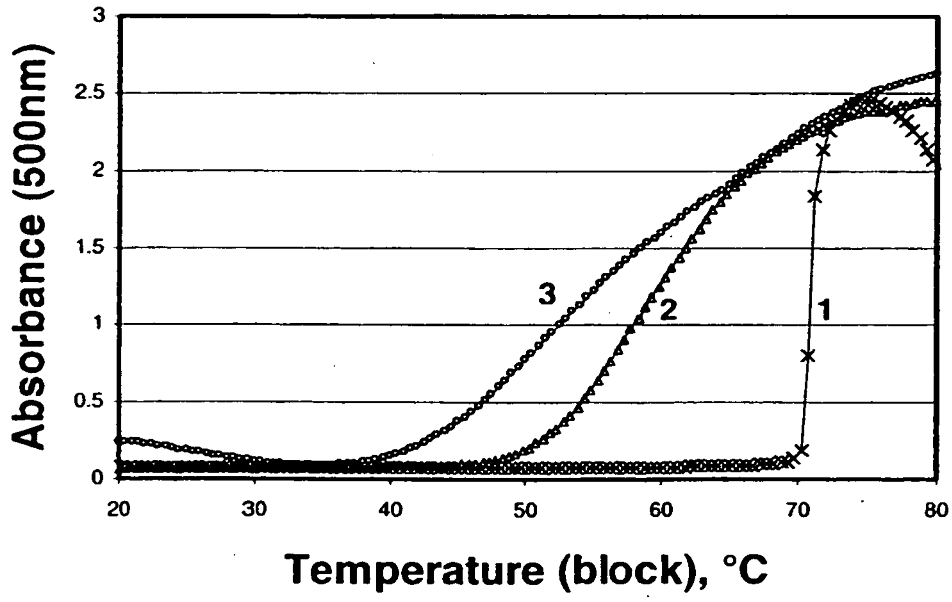
Absorbance (500nm)
3
2.5
2
1.5
1
0.5
0
20
30
40
50
60
70
80
Temperature (block), °C
3
2
1

FIG. 3

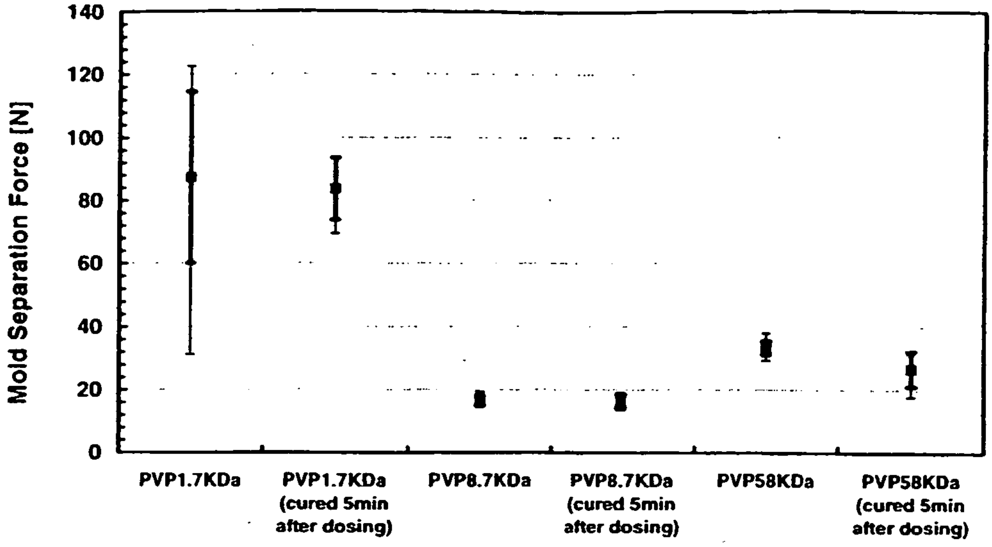
140
120
100
80
60
40
20
0
Mold Separation Force [N]
PVP1.7KDa
PVP1.7KDa (cured 5min after dosing)
PVP8.7KDa
PVP8.7KDa (cured 5min after dosing)
PVP58KDa
PVP58KDa (cured 5min after dosing)

FIG. 4

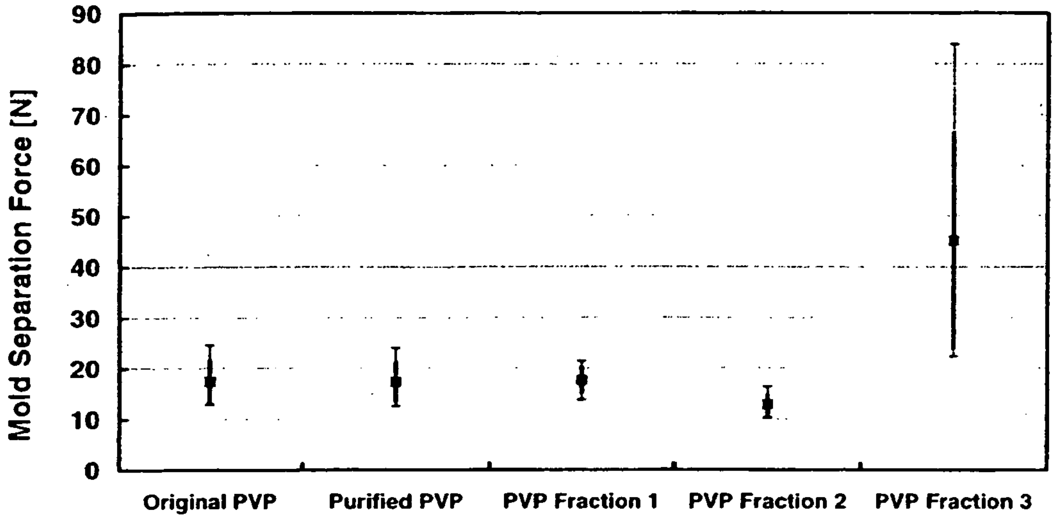
Mold Separation Force [N]
0
10
20
30
40
50
60
70
80
90
Original PVP
Purified PVP
PVP Fraction 1
PVP Fraction 2
PVP Fraction 3

FIG. 5

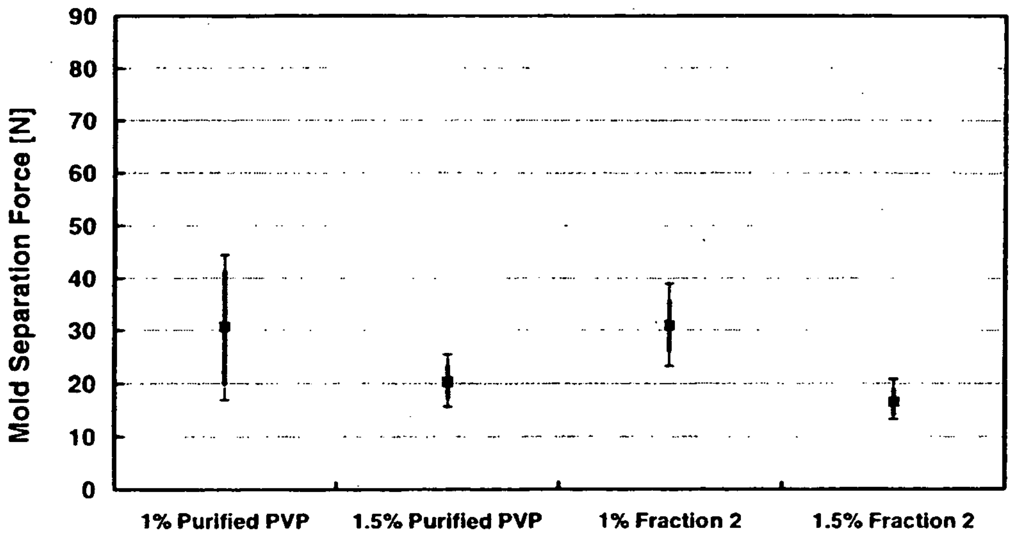
Mold Separation Force [N]
0
10
20
30
40
50
60
70
80
90
1% Purified PVP
1.5% Purified PVP
1% Fraction 2
1.5% Fraction 2

FIG. 6

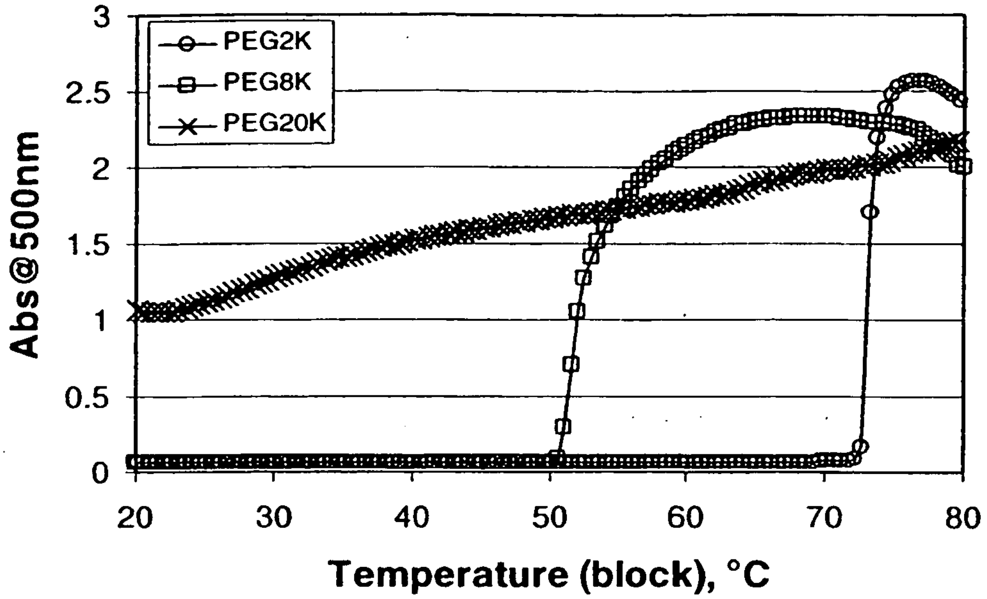
Abs@500nm
Temperature (block), °C
PEG2K
PEG8K
PEG20K
3
2.5
2
1.5
1
0.5
0
20
30
40
50
60
70
80

FIG. 7

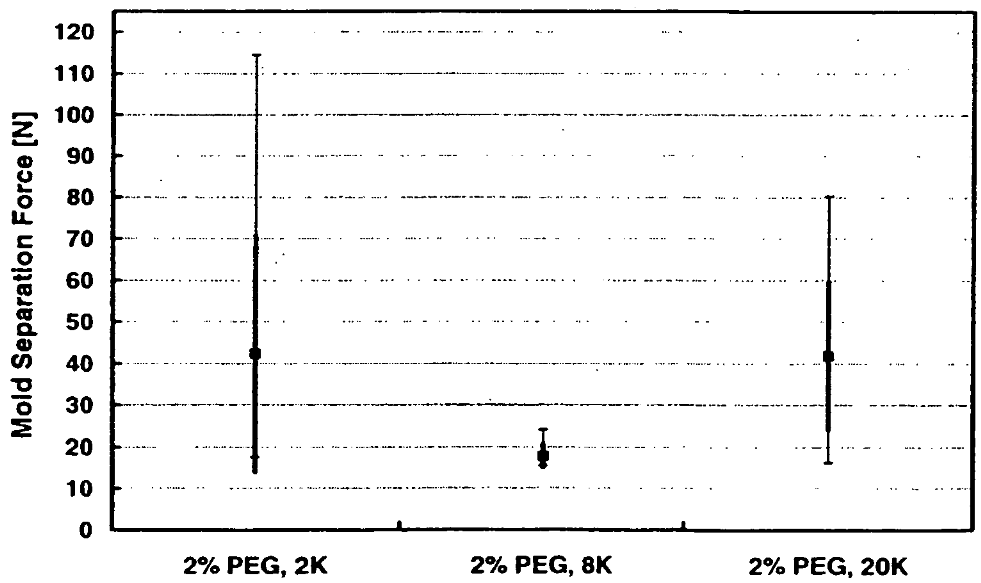
Mold Separation Force [N]
120
110
100
90
80
70
60
50
40
30
20
10
0
2% PEG, 2K
2% PEG, 8K
2% PEG, 20K

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 8704390 A
- EP 0367513 A
- US 5894002 A
- US 5508317 A
- US 5583163 A
- US 5789464 A
- US 5849810 A
- US 5264161 A
- US 4159292 A
- US 4929707 A
- US 5542978 A
- US 4534916 A
- US 4946923 A
- US 5013496 A
- US 5021503 A
- US 5126388 A
- US 5594088 A
- US 5753730 A
- US 6849210 B
- EP 632329 A
- US 6627124 B
- US 6479587 B
- US 20050113549 A1
- US 4444711 A, Schad
- US 4460534 A, Boehm
- US 5843346 A, Morrill
- US 27494294 A
- US 10732566 A
- US 10721913 A
- US 73256603 A
- US 4312575 A
- US 4632844 A
- US 6451871 B
- US 09774942 B
- US 09775104 B
- US 10654566 B
- US 6203909 B1